Europäisches Patentamt

European Patent Office

Office européen des brevets

(11) Publication number: **0 404 828 B1**

# EUROPEAN PATENT SPECIFICATION

(45) Date of publication of patent specification: **18.11.93**  (51) Int. Cl.⁵: **C02F 1/02**, C10J 3/00, B01J 23/74

(21) Application number: **89904335.0**

(22) Date of filing: **09.03.89**

(86) International application number: **PCT/US89/00957**

(87) International publication number: **WO 89/08613 (21.09.89 89/23)**

(54) **METHOD FOR CATALYTIC DESTRUCTION OF ORGANIC MATERIALS.**

(30) Priority: **15.03.88 US 168470**

(43) Date of publication of application:
**02.01.91 Bulletin 91/01**

(45) Publication of the grant of the patent:
**18.11.93 Bulletin 93/46**

(84) Designated Contracting States:
**AT BE CH DE FR GB IT LI LU NL SE**

(56) References cited:
**EP-A- 0 157 339**        **DE-A- 3 133 723**
**US-A- 1 608 075**        **US-A- 4 113 446**
**US-A- 4 188 193**        **US-A- 4 239 499**
**US-A- 4 657 681**

**Industrial & Engineering Chemistry Research, vol. 27, no. 2. Feb. 88, American Chemical Society, Washington US, M. Garg et al.: "The hydrogasification of wood", pages 256-264.**

(73) Proprietor: **BATTELLE MEMORIAL INSTITUTE**
**505 King Avenue**
**Columbus Ohio 43201-2693(US)**

(72) Inventor: **SEALOCK, L., John, Jr.**
**Rt. 1**
**Box 5131**
**W. Richland, WA 99352(US)**
Inventor: **BAKER, Eddie, G.**
**514 Shaw**
**Richland, WA 99352(US)**
Inventor: **ELLIOTT, Douglas, C.**
**1130 Catskill St.**
**Richland, WA 99352(US)**

(74) Representative: **Evans, David Charles et al**
**F.J. CLEVELAND & COMPANY**
**40-43, Chancery Lane**
**London, WC2A 1JO (GB)**

EP 0 404 828 B1

## Description

The present invention relates to methods for the destruction of organic materials, and in particular, the conversion of waste organic materials into an innocuous product gas at a relatively low temperature.

The quantities and types of organic wastes being generated has grown significantly over the past decade. Many of these organic wastes are hazardous in that they present significant environmental and health hazards. Hazardous wastes previously disposed of by unacceptable methods continue to be discovered in various wastes sites. Improved methods for treatment and disposal of these hazardous wastes are required to meet environmental standards and to treat these wastes in a cost-effective manner.

Recently, there have been increased research efforts aimed at improving the methods used to deactivate hazardous materials at problem waste sites. For wastes containing hazardous organics and water, it is desirable to destroy the organics so the water can be reused or discharged to ground or surface water streams. Thermal technologies currently being developed and employed for destruction or organic include incineration, wet air oxidation and supercritical oxidation. All of these require oxygen and convert the organics to carbon dioxide and water. The present invention reacts the organic with water to produce methane and carbon dioxide.

Another possible method for treating organic waste streams containing 25% or more of an aliphatic alcohol is disclosed in U.S. Patent 4,239,499 entitled "Production of Fuel Gas and Synthetic Natural Gas from Methanol", Pfefferle. But this process has certain limitations in regard to total water content of the waste stream. The process as disclosed is limited to a maximum of 1 mole of methanol to 1.5 moles of water due to potential catalytic deactivation as discussed in Column 5, lines 40-49 which states "Where water is present in the feed, carbon deposition can be reduced using low steam/methanol ratios, generally on the order of 0.5 to 1.5 moles of steam per mole of methanol. High steam/methanol ratios may result in premature catalyst degradation due to sintering. Thus the ability to operate the present conversion process at low steam levels is desirable." Another limitation is the economics of energy required to run the process. The amount of energy required to vaporize a methanol/water waste stream is 55.6% more than to use a liquid stream. Running a vaporize stream at 350°C requires 1075 Btu/lb. With the concentration of organic in water being held constant, a liquid stream at 350°C, the amount of energy required is 691 Btu. This results in a difference of 384 Btu/lb and with 8lb/gallon this results in a difference of 3072 Btu per gallon of waste stream.

U.S. Patent 4,113,446, Modell et al., also discloses a possible method for treating organic containing waste streams. In this process solid or liquid organic materials are converted to "high Btu gas" by reaction with water at or above the critical temperature of water and at or above the critical pressure of water to achieve the critical density of water. The reaction can be conducted either in the presence or absence of a catalyst. However this process also suffers from limitations in regard to the amount of methane produced. This is exemplified by the run with hexanoic acid in which less than one percent of methane was produced from approximately a 2% solution. In view of this low amount of methane production the energy economics of the system appear very unfavorable. For an example, taking a 10% organic in water solution the amount of energy required to heat and pressurize the system as disclosed takes 878 Btu/lb of solution to heat to the critical density of water to produce gas, having a fuel value of only 38 Btu.

Conventional water purification methods can be employed for organic waste streams containing less than one part per million.

In addition to hazardous and organic waste, other troublesome waste exist which can be converted in this process. These waste include agricultural residues and food processing wastes. Most nonlignocellulosic and food processing waste streams are disposed of by dumping on agricultural fields or used for cattle feed. Land disposal and using the waste as feed is starting to be regulated by the government. Some wastes have been shown to concentrate pesticides and are no longer acceptable for farming, land fill or cattle feed. Regulations are becoming more stringent causing these methods of disposal are expected to become greatly curtailed.

Conversion of some waste organic materials, such as contained in biomass materials, to low-BTU fuel gas, carbon monoxide and hydrogen by pyrolysis and substoichiometric burning at 500° to 800°C and about 1 to 10 atmospheres is well known. Studies undertaken to optimize this process have demonstrated that high temperatures with or without catalysts are required to minimize tar and char formation in this reaction. Recent interest in organic conversion has been aimed at production of a medium-BTU gas through the use of a steam and/or oxygen gasification environment. These processes would produce a cleaner carbon monoxide/hydrogen gas mixture which would be used for synthesis of methane as well as other products.

A method has now been discovered to convert organic waste materials to an innocuous product gas containing primarily methane, carbon dioxide and hydrogen, at lower temperatures than pyrolysis or substoichiometric burning processes.

For the purpose of this disclosure, "organic waste materials" means any organic compound or mixture of such compounds that exists as or decomposes to a liquid or gas at a temperature of at least 250°C and at a pressure of 50 atmospheres or more, and any aqueous solution, or any flowable suspension, slurry or sludge containing such a compound or mixture.

Throughout this specification, the non-SI units, Btu, Btu/lb, lb/gallon, Btu/gallon, atmosphere and psig are used. The corresponding SI units are J, $Jkg^{-1}$, $Kgl^{-1}$, $Jm^{-3}$ and $Nm^{-2}$ respectively; and the relevant conversion factors are as follows:-

1 Btu $= 1.05506 \times 10^3$ J

1 Btu/lb $= 2.326 \times 10^3$ $JKg^{-1}$

1 lb/gallon $= 119.8 Kgm^{-3}$

1 Btu/gallon $= 4.9808 \times 10^3 Jm^{-3}$

1 atmosphere $= 1.01325 \times 10^5 Nm^{-2}$

1 psig $= 6.89476 \times 10^3 Nm^{-2}$

According to the present invention, therefore, there is provided a method of treating an aqueous liquid which contains at least one organic compound as a contaminant, the method comprising heating the aqueous liquid thereby to convert said organic compound to one or more innocuous gasses and being characterised in that:

(i) the heat treatment is conducted at a temperature of 250°C to 500°C and at pressure sufficient to prevent substantial vaporization of water;

(ii) the heat treatment is conducted over a reduced nickel catalyst; and

(iii) the heat treatment is conducted in an inert atmosphere substantially free of gaseous oxygen.

It is therefore an object of the invention to provide a method for the catalytic destruction of organic containing waste streams in which the organic is converted to an innocuous gas containing primarily methane, carbon dioxide, and hydrogen. The carbon dioxide may be separated from other gases as may be present to leave higher heating value fuel gas which, depending on the organic content of the feed, may be useful as a fuel gas.

A pressure system may be used to contain the contaminated aqueous liquid. Pressure in the reactor system may be generated by the vapor pressure of the water and the gas product produced from the organic materials. The heat treatment may be conducted at a temperature of 250°C to 370°C, typically 350°C to 370°C. The pressure may be at least 50 atmospheres.

The organic compounds may be hydrocarbons (aliphatic, cycloaliphatic, aromatic); oxygenated hydrogencarbons, such as alcohols, carboxylic acids, aldehydes, ketones and phenols; halogenated hydrocarbons; or nonlignocellulosic carbohydrates, such as starches and sugars (which may be constituents of food processing wastes, brewery wastes, fruit pomace, potato processing wastes, whey or the like), or vegetable oils, e.g., olive oil. The said aqueous liquid may contain 0.1-10% by weight of said contaminant.

The organic waste material, in the form of an aqueous solution or slurry, may be fed into the pressure vessel. The aqueous solution or slurry fed into the reactor is in the liquid state. Running a vaporized stream at 350° requires 1075 Btu/lb. With a liquid stream at 350°C, the amount of energy required is 691 Btu. The amount of energy required to vaporize a solution is 55.6% more than to use a liquid stream. Overall energy economics results in a difference of 3072 Btu per gallon of waste stream. The process can treat aqueous wastes with a wide range of organic concentrations, from part per million levels up to about 25% by weight, preferably 0.1% to 10% by weight. It will be appreciated that water is an essential reactant to provide a source of hydrogen. The amount of water present may be sufficient to provide hydrogen as needed to promote the formation of product gases.

Inside the pressure vessel, the waste material is maintained in the absence of added gaseous oxygen at a temperature of 250°C to 500°C with additional water (if the organic waste material is highly concentrated) and an amount of reduced nickel sufficient to catalyze a reaction of the organic waste material with water to produce an innocuous product gas composed primarily of methane and carbon dioxide. The pressure in the vessel is just high enough to prevent substantial vaporization of water in the reactor, typically at least 50 atmospheres. Higher operating pressures such as would be required to reach the critical density of water are viewed as unnecessary and uneconomical. The best results may be achieved, with most feedstocks, at about 400°C.

The method may further include the steps of pretreating the waste organic materials to break down solids and preheating the organic materials before delivery to the pressure reactor. In particular, when present in sufficient quantity, a portion of the methane in the product gas may be recovered by conventional gas recovery techniques and burned to preheat the waste organic material before delivery to the pressure reactor.

Following is a description by way of example only and with reference to the accompanying drawings of methods of carrying the present invention into effect.

In the drawings:-

Fig. 1 is a schematic cross-sectional view of an autoclave apparatus for testing the method of the present invention.

Fig. 2 is a schematic view of the experimental system used in connection with the present invention.

Fig. 3 is a graph showing the effect of catalyst loading on carbon conversion to gas in the present invention.

Fig. 4 is a graph showing the effect of temperature of carbon conversion to gas in the present invention.

Fig. 5 is a graph showing the effect of organic concentration on carbon conversion to gas in the present invention.

Fig. 6 is a graph showing carbon conversion to gas for various hydrocarbons in accordance with the present invention.

Fig. 7 is a schematic view of a process for the catalytic destruction of organic materials in accordance with the present invention.

In order to study the kinetics of the waste organic conversion process of the present invention, an experimental reactor system was developed. In the experimental system, aqueous waste has been converted at low temperatures (300°C to 460°C) and pressures up to 240 atm to innocuous gases consisting primarily of methane, carbon dioxide and hydrogen. The experimental system is equipped with a sampling system which allows several samples to be taken throughout the course of the experiment while the reactor is maintained at reaction temperature and pressure.

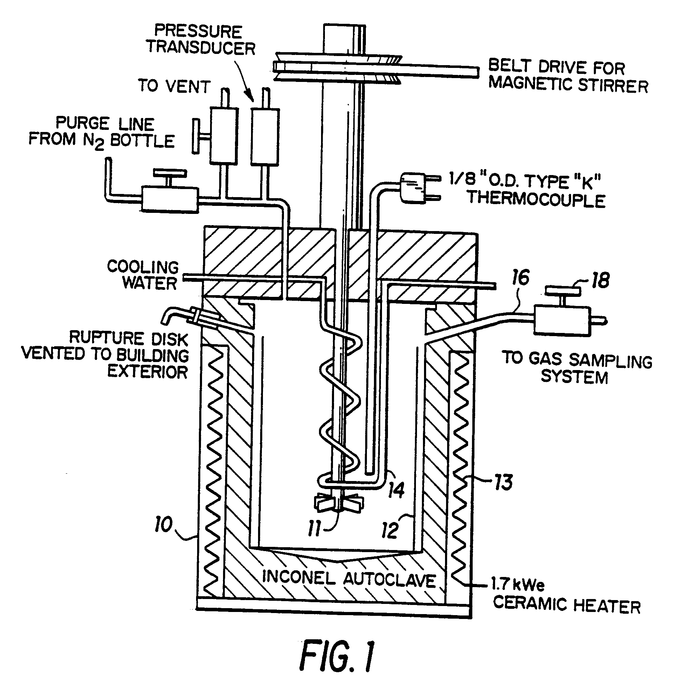

The experimental reactor system is shown in Fig. 1. The pressure vessel is a one liter autoclave 10 equipped with a magnetic stirrer 11. The autoclave 10 is of conventional design and is operated with standard electrical heating, cooling and stirring equipment provided with the unit. A stainless steel liner 12 is fitted into the reactor to facilitate product recovery and reactor cleanup.

The autoclave 10 is heated with an electric heater 13 with the capability to heat the reaction environment to approximately 500°C. Typical heat-up time required to heat 300 ml of aqueous waste and catalyst to 400°C is about 90 minutes. The aqueous waste and catalyst are rapidly mixed inside the autoclave 10 by the magnetic stirrer 11. The system is provided with a cooling coil 14 that is used to cool down the reactor contents at the end of each experiment.

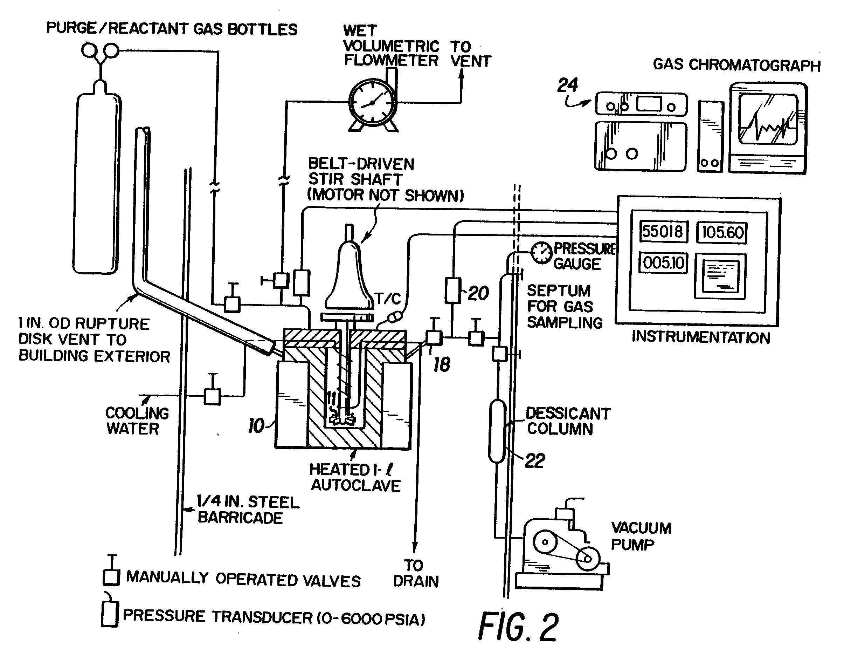

Gas samples are taken from the autoclave 10 through a body wall port 16 in the top of the reactor. The autoclave 10 and sample removal system are operated remotely after the reactor has been batch charged. The sampling system shown in Fig. 2 employs the combination of a manually operated sampling valve 18 and a pressure transducer 20 to collect carefully controlled sample volumes. Typically, the sample loop is filled to a pressure of 3 atm.

The volume of the sampling system is about 3.9 ml (2.6 ml sample holding loop plus 1.3 ml dead space prior to the sampling valve). The sampling system allows the entire sample loop to be evacuated prior to taking a sample, thus avoiding contamination from previous samples. The system is equipped with an adsorbent column 22 to collect any water or other liquids in the samples. This column 22 is weighed before and after experiments to permit quantitative determination of the mass of water collected. Tests performed to determine the effect of sample withdrawal from the system have indicated that variances due to the sample removal are indistinguishable from the variations due to experimental error.

In a typical catalytic experiment, the desired amount of organic waste, catalyst (ground to a powder) and any needed make-up water were weighed and charged to the stainless steel liner 12. The mixed waste/catalyst slurry in the liner 12 was placed in the autoclave 10 under ambient conditions. The autoclave 10 was sealed, purged with nitrogen, tested for leaks at 70 atm with nitrogen and vented until the pressure in the reactor was approximately 8 atm. The nitrogen that remained in the reactor was used as a reference to monitor the accumulation of gaseous products produced during the conversion of the organic. This was accomplished by measuring the dilution of the nitrogen in the gas samples taken at regular intervals once the reactor reached the desired reaction temperature. The reactor was then held at this temperature for approximately one hour. Pressures in the system ranged from about 135-375 atm depending on the reaction temperature selected and the amount of gas produced.

At the end of each experiment, cooling water was flushed through the internal cooling coil 14 of the reactor and the contents were brought to a temperature of 200°C within about 5 minutes. After the autoclave 10 had cooled completely, the gas product was vented and analyzed by conventional methods using a gas chromatograph 24. The liquid contents of the reactor were removed, measured and saved for later analysis by conventional methods, including gas chromatography. Solids, which were primarily catalyst, were filtered from the liquids, dried, weighed and the carbon content thereof determined.

Waste conversion was determined by subtracting the weight of the original organic waste still present in the reactor liquid product from the weight of organic material charged to the reactor. Carbon conversions to gas were calculated and amounts of gas produced were calculated.

Tests were completed with a variety of organic compounds at several concentrations, and several different types and concentrations of catalysts. In general, the reaction temperature was varied between 300°C and 460°C and the reaction pressure varied between 135 atm and 375 atm.

## CATALYST CHOICE

In order to determine the optimum catalyst composition, a number of tests were performed at 400°C with 10% hexone in water using a variety of catalysts at a catalyst concentration of 1.2 g catalyst per g of hexone. The conversion of the hexone with the various catalysts are summarized in TABLE 1.

As can be clearly seen from TABLE 1, the best conversions (>99.4%) were achieved using catalysts containing

TABLE 1. Hexone Conversion With Different Catalysts at a Pressure of 3000 psig
(400°C, 10% Hexone in Water, 1.2g Catalyst/g Hexone)

| Catalyst | Supplier | Catalyst Composition | Composition Active Metals | Form | Hexone Conversion wt% |
|---|---|---|---|---|---|
| Ni 1404 | Harshaw | $Ni/Al_2O_3$ | 64% Ni | Reduced & stabilized | 99.7 |
| Ni 3288 | Harshaw | $Ni/Al_2O_3$ | 60% Ni | Reduced & stabilized | 99.6 |
| G-65 RS | United Catalysts | Ni/refractory | 27% Ni | Reduced & stabilized | 99.4 |
| ---- | Englehard | $Pt/Al_2O_3$ | 5% Pt | Reduced | 49.4[a] |
| KAT 479 | Katalco | $CoMo/Al_2O_3$ | 19% $MoO_3$ 4% CoO | Unreduced | 23.1 |
| G-62 RS | United Catalysts | Co/refractory | 34.5% Co | Reduced | 14.9 |
| G-90C | United Catalysts | $Ni/Al_2O_3$ | 15% Ni | Unreduced | 14.6 |
| LZY82 | Union Carbide | Y-Zeolite | ---- | ---- | 13.4 |

EP 0 404 828 B1

TABLE 1.    Continued

| Catalyst | Supplier | Catalyst Composition | Composition Active Metals | Form | Hexone Conversion wt% |
|---|---|---|---|---|---|
| G-65 | United Catalysts | Ni/refractory | 25% Ni | Unreduced | 12.2 |
| Ni 3263 | Harshaw | Ni/Al$_2$O$_3$ | 64% Ni | Unreduced | 10.0 |
| ---- | ---- | Na$_2$CO$_3$ | ---- | ---- | 7.9 |
| C-73 | United Catalysts | Fe$_2$O$_3$ | 95% Fe$_2$O$_3$ | Unreduced | 6.9 |
| G-47 | United Catalysts | Fe$_2$O$_3$/Al$_2$O$_3$ | 3% Fe$_2$O$_3$ | Unreduced | 6.4 |
| C-73 RS | United Catalysts | Fe$_2$O$_3$ | ---- | Reduced & stabilized | 5.5 |
| None | ---- | ---- | ---- | ---- | 6.0 |

[a]Conversion was primarily to carbon (38%) with a lesser amount to gases and liquids (11%).

nickel in a reduced and stabilized form (Ni 1404, Ni 3288 and G-65 RS). "Stabilized" means treated to prevent oxidation during storage. To maintain the nickel catalyst in reduced form, an atmosphere free of added gaseous oxygen is maintained in the reactor.

Other catalysts, included nickel catalysts which were unreduced, produced impractically low conversions of the hexone. Hexone conversion using the three unreduced nickel catalysts (G-90C, G-65 and Ni

7

3263) was 10.0 - 14.6%. A platinum catalyst was useful to convert a moderate amount of hexone, but the resulting product was less than 11% gasses and liquids. The hexone conversion with no catalyst was 6.0%.

We have discovered in our process by using the reduced nickel catalyst and only the reduced nickel catalyst, we are able to use a waste stream containing only 0.1% by weight of hexone in water. It appears other catalysts are oxidized in the presence of excess water, but the reduced nickel catalyst remains stable.

## EFFECT OF CATALYST LOADING

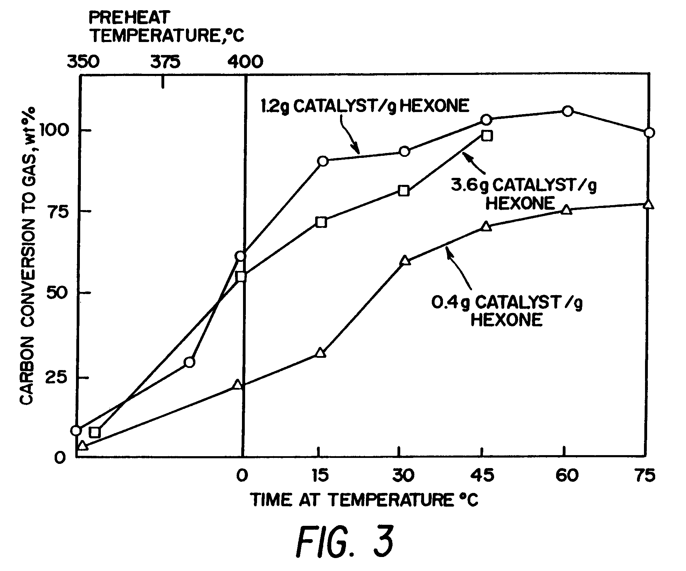

In order to determine the effect of catalyst loading, Ni 1404 in concentrations of 0.4, 1.2 and 3.6 g catalyst per g hexone was tested. Fig. 3 shows the carbon conversion to gas as a function of time at temperature for these three different catalyst loadings. There is little difference between 1.2 and 3.6 g catalyst/g hexone, but the rate of conversion is significantly slower with 0.4 g catalyst/g hexone.

For continuous operation, increasing the amount of catalyst will increase the throughput.

## EFFECT OF TEMPERATURE

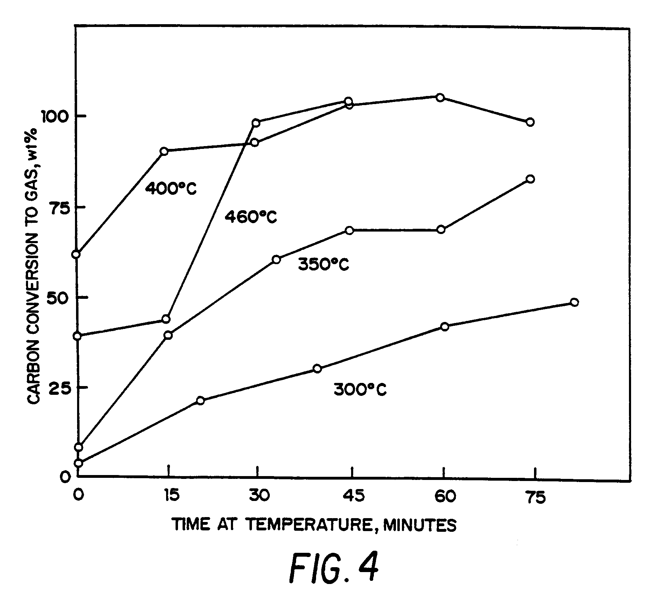

The effect of temperature on hexone conversion using Ni 1404 was evaluated over the temperature range of 300-460°C as shown in Fig. 4. Conversion was high at the three highest temperatures tested: 99.5% at 350°C, 99.7% at 400°C and 99.9% at 460°C. Conversion fell to 96.6% at 300°C.

## EFFECT OF ORGANIC CONCENTRATION

We have completed four experiments with hexone (MIBK) and two with naphthalene.

Hexone was successfully converted to gas when the feed concentration was 20 wt%, 40 wt%, and 60 wt%. At 80 wt% the rate of conversion was appreciably slower and stopped around 70% conversion. At 80 wt% there is apparently not enough water to complete the reaction. Equation 1 below is the stoichiometric reaction of water and hexone to produce methane and carbon dioxide.

$$C_6H_{12}O + 2.5\ H_2O \rightarrow 4.25\ CH_4 + 1.75\ CO_2 \qquad (1)$$

Based on equation 1 about 31 wt% water (69% hexone) is required to completely react the hexone. This falls between the 60% hexone test where near complete conversion was achieved and the test with 80% hexone where conversion was incomplete.

The same type of analysis for naphthalene ($C_{10}H_8$) indicates 53% water (47% naphthalene) is required from complete conversion. With 25% naphthalene in water conversion was quite slow but it was apparent that near complete conversion could be achieved given enough time. In a test with 40% naphthalene almost no conversion was achieved. The upper limit for naphthalene is apparently somewhere below the theoretical water limit.

In view of the results disclosed above, it appears the organics react with water and are converted primarily to methane and carbon dioxide. In experiments with chlorinated hydrocarbons and chlorine-containing water, chlorine was converted to HCl. Other halogens would react in the same manner. The maximum organic concentration in water that can be treated is defined by the stoichiometric reaction of each organic with water to produce methane and carbon dioxide (and Hx if a halogen is present in the organic) as shown in the generic reaction below:

$$C_mH_nO_qX_r + 1/4\ (4m\text{-}n\text{-}2q+r)\ H_2O \rightarrow 1/8\ (4m+n\text{-}2q\text{-}r)\ CH_4 + 1/8\ (4m\text{-}n+2q+r)\ CO_2 + r\ Hx$$

wherein X is a halogen, e.g., chlorine.

As can be seen from this equation, the more hydrogen and oxygen in the organic, the smaller the amount of water required for complete conversion.

With some compounds, such as naphthalene, the practical upper limit is below the stoichiometric upper limit. It appears that excess water (above the Stoichiometric amount) for aromatic compounds aids in speeding up the conversion. Also very few compounds are soluble up to their stoichiometric limit, phase separation maybe a more practical method of separation.

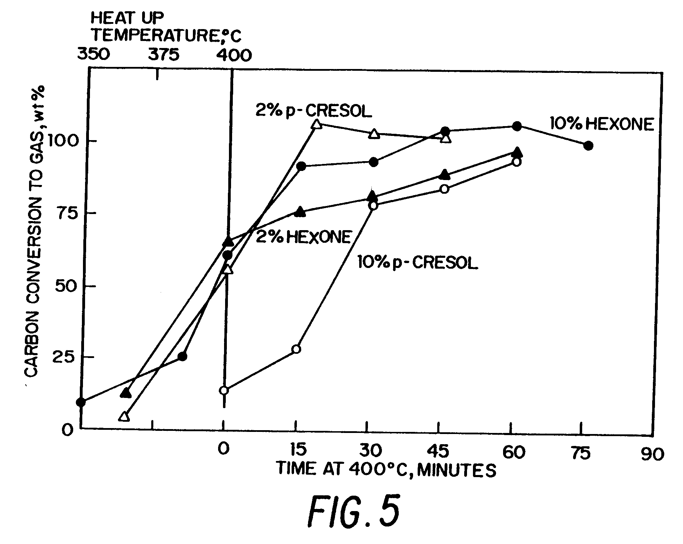

Most of the tests of the present invention were made at 10 wt% organic in water. This level is probably higher than would be typically encountered in an aqueous waste stream but allowed for better mass balances. Tests were made with hexone and p-cresol for comparisons The results of those tests are shown in Fig. 5, which shows carbon conversion to gas as a function of time. Catalyst concentration was kept at 1.2 g catalyst per g of organic. Conversions were 99.9% with both compounds at the 2 wt% level.

In commercial operation, the greatest energy recovery is achieved using highly concentrated organic waste materials and/or materials containing a large quantity of high molecular weight organic compounds.

## CONVERSION OF OTHER HYDROCARBONS AND OXYGENATED HYDROCARBONS

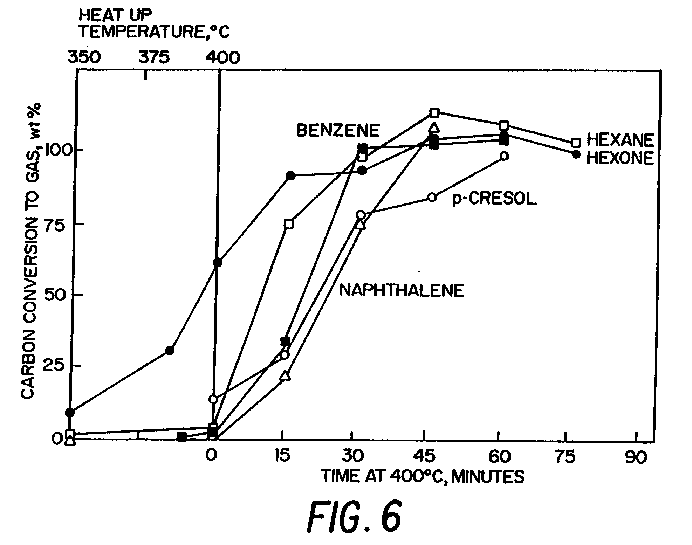

In addition to hexone, tests were made with four other hydrocarbons and oxygenated hydrocarbons: hexane, benzene, p-cresol and naphthalene. All of the tests were performed at 400°C with 10 wt% organic in water mixtures. Ni 1404 at 1.2 g/g organic was utilized. Conversion of all of the compounds was over 99% and in most cases approached 99.9%, as shown in Fig. 6. Hexone and hexane converted most rapidly, with benzene, p-cresol and naphthalene being slightly slower. Gas was the only product from catalytic destruction of these organics except from p-cresol and benzene, where small amounts of other aromatics (0.4-0.8% yield) were present in the liquid effluent.

Other organic waste materials would likewise be converted, including food processing wastes which contain nonlignocellulosic carbohydrates such as sugars and starches. Examples of other waste materials which can be treated are brewery wastes, potato processing wastes, whey, and vegetable oils, e.g., olive oil. Conversions of over ninety percent, with high methane yields, have been consistently obtained in one hour runs with whey and glucose feedstocks at temperatures of as low at 350°C and pressures of at least 209 atm.

For example, glucose was converted at 350°C and 231 atm using Ni 1404 catalyst. 97.7% of the carbon was converted to gas and 1.4% was converted to liquid. The composition of the gas, in mole%, was as follows: $H_2$ 5.6%, $CO_2$ 50.5%, $CH_4$ 40.1%, $C_2H_6$ 1.7%, CO 0% and others 1.2%. The methane yield was 0.3031 $CH_4$ per g glucose.

## CONVERSION OF CHLORINATED HYDROCARBONS

Two chlorinated compounds, trichloroethylene (TCE) and chlorobenzene were tested. TCE is representative of a wide number of chlorinated solvents that are often a problem in groundwater. Chlorobenzene was used as a model compound for chlorinated aromatics such as PCBs.

Destruction of both compounds was high, typically 99% for chlorobenzene and 99.9% for TCE at 400°C and about 300 atm. However, the products were much different than those obtained from other tested hydrocarbons. With chlorobenzene, almost no gas was produced and what little gas that was produced consisted primarily of carbon dioxide compared to the large amounts of methane produced from nonchlorinated hydrocarbons (at lower organic concentrations, the benzene would be destroyed). Benzene was the major product identified.

The conversion of TCE to gas was higher but because TCE is predominately chlorine on a weight basis there is still not much gas produced. In two tests with TCE, 38% of the carbon was converted to gas at 350°C and 62% at 400°C. The gas was primarily carbon dioxide with a small amounts of both methane and ethane.

However, hydrochloric acid (HCl) was a product from both of the conversion processes, and the HCl appeared to have a detrimental effect on catalyst activity.

## ENERGY ECONOMICS OF THE PROCESS

As noted in discussion regarding prior art, other proposed systems suffer from the economics of the total amount of energy required to run the process and the total amount of energy produced by the process.

This is exemplified by the following examples.

To deliver vaporized feedstock to the reactor as described in U.S. Patent 4,239,449, the amount of energy required to vaporize a methanol/water waste stream is 55.6% more than is required for a liquid stream. Running a vaporize stream at 350°C and 1500 psig requires 1075 Btu/lb. Using the process of our invention and with the concentration of organic in water being held constant, a liquid stream at 350°C and 3000 psig, requires 691 Btu for heating and pressurization. This results in a difference of 384 Btu/lb and with 8lb/gallon this results in a difference of 3072 Btu per gallon of waste stream.

Using the process as described in U.S. Patent 4,113,446 and a 10% organic (hexanoic acid) in water solution, the amount of energy required by system as disclosed takes 878 Btu/lb of solution to heat and pressurize to the critical density of water to produce a gas having a heating value of only 38 Btu. In the process of our invention and with the concentration of organic in water being held constant, the amount of energy required for 350°C and 3000 psig is 691 Btu/lb of solution with gas having a heating value of 1333 Btu/lb of solution. This results in a net value of 642 Btu/lb or 5136 Btu per gallon of waste stream.

## PREFERRED METHOD OF LARGER SCALE CONVERSION

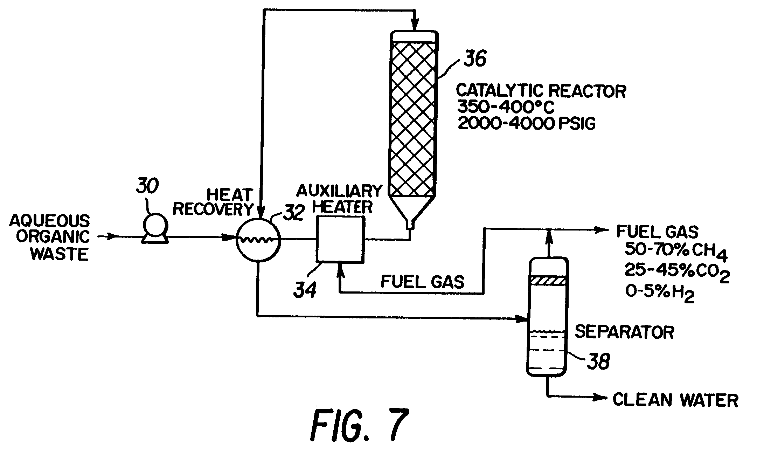

Fig. 7 shows an apparatus for a preferred embodiment of the process of the present invention. The organic wastes in an aqueous solution is pumped to 100-300 atm by high pressure pump 30 and then passed through a heat exchanger 32 to preheat the waste stream to 300°C-400°C. It is believed that most of the preheat can be provided by heat exchange with the reactor effluent. Necessary auxiliary heat may be supplied by an outside heat Source or by burning the product gas in heater 34. If the organic content of the waste stream is 1 wt% or more, it should provide sufficient fuel gas to heat the process.

After being preheated, the waste stream is delivered to a pressure reactor 36 for conversion of the organic wastes into a product gas. After being passed through heat exchanger 32 to preheat the incoming waste stream, the effluent from the reactor 36 is separated into its constituent parts, as in separator 38 or other conventional gas recovery methods.

In a continuous system where the product gas may be removed or vented as it is produced, the pressure in the system can be reduced. To minimize the process energy requirements, the pressure must be high enough to minimize the amount of water converted into steam. Based upon the enthalpy and specific volume of water at various conditions, it is believed that the optimum operating conditions are 300°C to 370°C and a pressure just sufficient to prevent substantial vaporization of water.

In all of the lab tests performed, the reactor was held at temperature for about one hour. Over 90% conversion was often achieved in 15-20 minutes based upon monitoring of the gas production. Catalyst loading and contacting also affected the rate of reaction. Based upon the batch lab tests it is believed that a residence time of 30 minutes or less will be sufficient in most cases.

Reduced nickel was the only effective catalyst, as discussed above. Three other transition metals (Co, Fe, Pt) with catalytic properties similar to nickel were all ineffective in the reduced state and as oxides.

Although Ni 1404 and other Ni catalysts may be purchased in a reduced and stabilized form, the reactor could initially be charged with an unreduced nickel catalyst, provided that the catalyst is reduced within the pressure reactor 36. To reduce nickel oxide catalysts to nickel metal they can be treated with flowing hydrogen at temperatures from ambient to 450°C. The catalyst should be reduced until no additional water is formed. Reduction rate is increased by increasing the temperature, but care must be taken not to overheat and sinter the catalyst. Because the reduction is exothermic, it should begin at relative low temperature (usually about 100°C). The temperature should be increased gradually until the reduction is complete.

Although preferred embodiments of the present invention have been shown, it is obvious that many modifications and variations of the invention are possible in light of the above teachings. For example, a variety of batch or continuous reactors could be used, including fixed bed reactors, fluidized bed reactors and the like. For convenience, it is preferred to use a supported catalyst retained within a continuous reactor. It is therefore to be understood that the present invention may be practiced otherwise than as specifically described.

According to the present invention, as hereinbefore described, waste organic materials may be converted to an innocuous gas product rich in methane in the presence of water and a reduced nickel catalyst in a high-pressure reactor at a pressure sufficient to prevent substantial vaporisation of the water and a temperature of 250°C to 500°C at rates similar to those achieved in a non-pressurized reactor at temperatures that are 200°C to 500°C higher. Additionally, methane production may be greatly increased due to the lower temperatures and higher pressures of the system as compared with the pyrolysis or substoichiometric burning.

Because they employ low temperatures and liquid phase operation, methods according to the invention are particularly well suited to be performed with transportable processing equipment. Such equipment may, for example, easily be transported from one waste disposal site to another, as needed.

## Claims

1. A method of treating an aqueous liquid which contains at least one organic compound as a contaminant, the method comprising heating the aqueous liquid thereby to convert said organic compound to one or more innocuous gases and being characterised in that:

(i) the heat treatment is conducted at a temperature of 250°C to 500°C and at pressure sufficient to prevent substantial vaporization of water;

(ii) the heat treatment is conducted over a reduced nickel catalyst; and

(iii) the heat treatment is conducted in an inert atmosphere substantially free of gaseous oxygen.

2. A method according to Claim 1, wherein said organic compound is selected from the group consisting of hydrocarbons, oxygenated hydrocarbons, halogenated hydrocarbons, nonlignocellulosic carbohydrates and vegetable oils.

3. A method as defined in Claim 2, wherein said nonlignocellulosic carbohydrates are constituents of a product selected from the group consisting of food processing wastes, brewery wastes, fruit pomace, potato processing wastes, and whey.

4. A method as defined in any preceding claim, wherein said temperature is in the range of 250° to 370°C.

5. A method as defined in any preceding claim, wherein said temperature is in the range of 350° to 370°C.

6. A method as defined in any preceding claim, wherein the concentration of said contaminant is in the range of 0.1% to 10% by weight.

7. A method as defined in any preceding claim, wherein water is present in excess of stoichiometric amounts according to the equation:

$$C_mH_n0_gX_r \ + \ 1/4(4m\text{-}n\text{-}2g+r) \ H_20 \ + \ 1/8 \ (4m+n\text{-}2g\text{-}r) \ CH_4 \ + \ 1/8 \ (4m\text{-}n+2g+r) \ CO_2 \ + \ r \ HX$$

where X is a halogen.

8. A method as defined in any preceding claim, wherein said innocuous gases contains a high portion of methane.

9. A method as defined in any preceding claim, wherein said pressure is substantially the minimum required to prevent substantial vaporization of water at said temperature.

10. A method as defined in any preceding claim, wherein carbon dioxide and methane are separated from other gases as may be present from each other.

11. A method as defined in any preceding claim, wherein the pressure is at least 5.1 x $10^6$ $Nm^{-2}$ (50 atmospheres).

**Patentansprüche**

1. Verfahren zur Behandlung einer wäßrigen Flüssigkeit, die wenigstens eine organische Verbindung als Verunreinigung enthält, bei welchem Verfahren die wäßrige Flüssigkeit erhitzt wird, um dadurch die organische Verbindung in ein oder mehrere unschädliche Gase umzuwandeln, dadurch gekennzeichnet, daß
   (i) die Wärmebehandlung bei einer Temperatur von 250° C bis 500° C und unter einem ausreichenden Druck durchgeführt wird, um wesentliche Verdampfung des Wassers zu verhindern;
   (ii) die Wärmebehandlung über einem reduzierten Nickelkatalysator durchgeführt wird, und
   (iii) die Wärmebehandlung in einer inerten Atmosphäre durchgeführt wird, die im wesentlichen frei von gasförmigem Sauerstoff ist.

2. Verfahren nach Anspruch 1, dadurch gekennzeichnet, daß die organische Verbindung aus der Gruppe Kohlenwasserstoffe, oxidierte Kohlenwasserstoffe, halogenierte Kohlenwasserstoffe, nicht von Lignocellulose abgeleitete Kohlenhydrate und pflanzliche Öle ausgewählt ist.

3. Verfahren nach Anspruch 2, dadurch gekennzeichnet, daß die nicht von Lignocellulose abgeleiteten Kohlenhydrate Bestandteile eines Produktes sind, das aus der Gruppe Abfälle von der Lebensmittelverarbeitung, Brauereiabfälle, Fruchtmassen, Abfälle von der Kartoffelverarbeitung und Molke ausgewählt ist.

**4.** Verfahren nach einem der vorstehenden Ansprüche, dadurch gekennzeichnet, daß die Temperatur im Bereich von 250° bis 370° C liegt.

**5.** Verfahren nach einem der vorstehenden Ansprüche, dadurch gekennzeichnet, daß die Temperatur im Bereich von 350° bis 370° C liegt.

**6.** Verfahren nach einem der vorstehenden Ansprüche, dadurch gekennzeichnet, daß die Konzentration der Verunreinigung im Bereich von 0,1 Gew.-% bis 10 Gew.-% liegt.

**7.** Verfahren nach einem der vorstehenden Ansprüche, dadurch gekennzeichnet, daß Wasser in stöchiometrischen Überschußmengen entsprechend der Gleichung

$$C_mH_nO_gX_r \ + \ 1/4(4m\text{-}n\text{-}2g+r) \ H_2O \ + \ 1/8 \ (4m+n\text{-}2g\text{-}r) \ CH_4 \ + \ 1/8 \ (4m\text{-}n+2g+r) \ CO_2 \ + \ r \ HX \ ,$$

worin X Halogen ist, vorhanden ist.

**8.** Verfahren nach einem der vorstehenden Ansprüche, dadurch gekennzeichnet, daß die unschädlichen Gase einen hohen Anteil von Methan enthalten.

**9.** Verfahren nach einem der vorstehenden Ansprüche, dadurch gekennzeichnet, daß der Druck im wesentlichen das Minimum ist, das erforderlich ist, um wesentliche Verdampfung des Wassers bei der besagten Temperatur zu verhindern.

**10.** Verfahren nach einem der vorstehenden Ansprüche, dadurch gekennzeichnet, daß Kohlendioxid und Methan wie auch andere Gase, falls vorhanden, voneinander getrennt werden.

**11.** Verfahren nach einem der vorstehenden Ansprüche, dadurch gekennzeichnet, daß der Druck wenigstens $5,1 \cdot 10^6$ $Nm^{-2}$ (50 Atmosphären) beträgt.

**Revendications**

**1.** Procédé de traitement d'un liquide aqueux contenant au moins un composé organique comme contaminant, le procédé comprenant le chauffage du liquide aqueux afin de convertir ledit composé organique en un ou plusieurs gaz inoffensifs et étant caractérisé en ce que :

(i) on effectue le traitement thermique à une température de 250°C à 500°C et à une pression suffisante pour éviter une vaporisation substantielle de l'eau;

(ii) on effectue le traitement thermique sur un catalyseur de nickel réduit;

-iii) on effectue le traitement thermique dans une atmosphère inerte substantiellement exempte d'oxygène gazeux.

**2.** Procédé selon la revendication 1, dans lequelle ledit composé organique est choisi dans le groupe comprenant des hydrocarbures, des hydrocarbures oxygénés, des hydrocarbures halogénés, des hydrates de carbone non lignocellulosiques et des huiles végétales.

**3.** Procédé selon la revendication 2, dans lequelle les hydrates de carbone non lignocellulosiques sont des constituants d'un produit choisi dans le groupe comprenant des déchets de traitement de denrées, des déchets de brasserie, des résidus de fruit, des déchets de traitement de pommes de terre, et de petitlait.

**4.** Procédé selon l'une quelconque des revendications précédentes, dans lequelle ladite température est dans la plage de 250°C à 370°C.

**5.** Procédé selon l'une quelconque des revendications précédentes, dans lequelle ladite température est dans la plage de 350°C à 370°C.

**6.** Procédé selon l'une quelconque des revendications précédentes, dans lequelle la concentration dudit contaminant est dans la plage de 0,1 % à 10 % en poids.

**7.** Procédé selon l'une quelconque des revendications précédentes, dans lequelle l'eau est présente en excès des quantités stoechiométriques suivant l'équation :

$$C_mH_nO_gX_r + 1/4 (4m\text{-}n\text{-}2g + r) H_2O + 1/8 (4m + n\text{-}2g\text{-}r) CH_4 + 1/8 (4m\text{-}n + 2g + r) CO_2 + r HX$$

où X est un halogène.

**8.** Procédé selon l'une quelconque des revendications précédentes, dans lequelle lesdits gaz inoffensifs contiennent une grande proportion de méthane.

**9.** Procédé selon l'une quelconque des revendications précédentes, dans lequelle ladite pression est substantiellement le minimum nécessaire pour éviter la vaporisation substantielle de l'eau à ladite température.

**10.** Procédé selon l'une quelconque des revendications précédentes, dans lequelle on sépare le dioxyde de carbone et le méthane des autres gaz pouvant être présents.

**11.** Procédé selon l'une quelconque des revendications précédentes, dans lequelle la pression est au moins de 5,1 x $10^6$ $Nm^{-2}$ (50 atmosphères).

FIG. 1

GAS CHROMATOGRAPH

24

PURGE / REACTANT GAS BOTTLES

WET VOLUMETRIC FLOWMETER

TO VENT

BELT-DRIVEN STIR SHAFT (MOTOR NOT SHOWN)

T/C

1 IN. OD RUPTURE DISK VENT TO BUILDING EXTERIOR

COOLING WATER

55018  105.60

005.10

INSTRUMENTATION

PRESSURE GAUGE

SEPTUM FOR GAS SAMPLING

20

18

HEATED 1-ℓ AUTOCLAVE

10

DESSICANT COLUMN

22

VACUUM PUMP

TO DRAIN

1/4 IN. STEEL BARRICADE

⌷ MANUALLY OPERATED VALVES

⌷ PRESSURE TRANSDUCER (0-6000 PSIA)

FIG. 2

FIG. 3

FIG. 4

FIG. 5

FIG. 6

FIG. 7

CATALYTIC REACTOR
350-400°C
2000-4000 PSIG

36

AQUEOUS
ORGANIC
WASTE

30

HEAT
RECOVERY

32

AUXILIARY
HEATER

34

FUEL GAS

FUEL GAS
50-70% $CH_4$
25-45% $CO_2$
0-5% $H_2$

SEPARATOR

38

CLEAN WATER

EP 0 404 828 B1